# EUROPEAN PATENT SPECIFICATION

(11) **EP 3 992 325 B1**
(45) Date of publication and mention of the grant of the patent: **22.04.2026**
(21) Application number: 20858980.4
(22) Date of filing: 26.08.2020
(51) Int. Cl.: C22C 38/02, C22C 38/04, C22C 38/06, C22C 38/00, C22C 38/60, C22C 38/14, C21D 9/46, C21D 8/12, C21D 6/00, C21D 1/28

(54) **NON-ORIENTED ELECTRICAL STEEL SHEET AND MANUFACTURING METHOD THEREFOR**
NICHTAUSGERICHTETES ELEKTROSTAHLBLECH UND HERSTELLUNGSVERFAHREN DAFÜR
TÔLE D'ACIER ÉLECTRIQUE NON ORIENTÉE ET SON PROCÉDÉ DE FABRICATION

(30) Priority: 26.08.2019 CN 201910790431
(43) Date of publication of application: 04.05.2022
(73) Proprietor: BAOSHAN IRON & STEEL CO., LTD., Shanghai 201900 (CN)
(72) Inventor: ZHANG, Feng, Shanghai 201900 (CN); CHU, Shuangjie, Shanghai 201900 (CN); WANG, Bo, Shanghai 201900 (CN); ZHANG, Wenyue, Shanghai 201900 (CN); SHEN, Kanyi, Shanghai 201900 (CN); LI, Guobao, Shanghai 201900 (CN)
(74) Representative: Maiwald GmbH
(86) International application number: PCT/CN2020/111404
(87) International publication number: WO 2021/037063

(56) References cited:
- WO-A1-2019/125078
- WO-A1-2019/125078
- WO-A1-2019/132130
- CN-A- 1 887 512
- CN-A- 102 676 916
- CN-A- 103 173 678
- CN-A- 104 789 862
- CN-A- 108 474 076
- CN-A- 110 106 447
- CN-A- 110 106 447
- KR-A- 20140 133 100
- KR-A- 20160 075 262
- KR-A- 20190 077 984
- KR-A- 20190 077 984
- KR-B1- 101 728 827
- US-A1- 2015 013 844
- US-A1- 2019 189 318

## Description

### TECHNICAL FIELD

The present invention relates to a steel sheet and a manufacturing method therefor, in particular to a non-oriented electrical steel sheet and a manufacturing method therefor.

### BACKGROUND

Due to an increasing demand for energy saving, environmental protection and high efficiency, the non-oriented electrical steel sheets for making driving motors of electric vehicles are gradually developing in the direction of thin gauge, high magnetic induction, low iron loss and high strength, so as to meet miniaturization and high efficiency of iron cores made therefrom. Usually, a large amount of silicon and aluminum will be added into the steel so as to meet the high-strength demands of steel sheets.

As an example, CN 103290190 A (published on September 11, 2013, "Non-oriented Silicon Steel and Manufacturing Method Therefor") discloses a non-oriented silicon steel with excellent magnetic properties. In this disclosure, the content of Si reaches 2.5-4.0%, the content of Al reaches 0.5-1.5%. In this way, as the content of Si and Al increases, the iron loss of the material decreases rapidly, but the magnetic induction of the material also decreases rapidly.

As another example, in order to effectively improve the magnetic induction of finished strip steels, CN 1888112 A (published on January 3, 2007, "High Grade Non-Oriented Electrical Steel with High Magnetic Induction and Manufacturing Method Therefor") discloses an electrical steel and a manufacturing method therefor. In this disclosure, an ideal hot-rolled strip steel structure is obtained by rough rolling with large reduction, rough roller rolling, high temperature coiling, and optimizing a reduction ratio of each pass. The increase in cold-rolling reduction ratio provides greater energy (deformation energy) for grain growth during the final recrystallization annealing process. Through measures such as obtaining an ideal grain structure by controlling a recrystallization annealing temperature, an iron core with excellent surface quality, high magnetic induction and low iron loss most suitable for a high-efficiency motor is obtained.

Researches have shown that a rapid continuous annealing of cold-rolled strip steel through electromagnetic induction heating can greatly increase the driving force for grain growth and reduce the formation of unfavorable textures, thereby greatly improving the electromagnetic properties of the finished steel strips.

As a further example, CN 102453837 A (published on May 16, 2012, "Manufacturing Method for Non-oriented Silicon Steel with High Magnetic Induction") discloses a manufacturing method for non-oriented silicon steel with high magnetic induction. In this disclosure, the method includes the following steps: 1) smelting and casting (wherein the non-oriented silicon steel comprises the following elements in weight percentage: Si: 0.1-1%, Al: 0.005-1%, C≤0.004%, Mn: 0.10-1.50%, P≤0.2%, S≤0.005%, N≤0.002%, Nb+V+Ti≤0.006%; the balance being Fe), which includes steel making, secondary refining, and casting into a casting slab; 2) hot rolling, wherein a heating temperature is 1150°C-1200°C, a finishing rolling temperature is 830-900°C, and coiling is performed at a temperature ≥570°C; 3) flattening, being a cold rolling with a reduction ratio of 2-5%; 4) normalizing, wherein a temperature is not lower than 950°C and a heat preservation time is 30-180 s; 5) acid pickling and cold rolling, wherein a cold rolling with cumulative rolling reduction ratio of 70-80% is performed after acid pickling; and 6) annealing, wherein a heating rate is ≥100°C/s, heat preservation is performed at 800-1000°C for 5-60 s, and then the steel is slowly cooled to 600-750°C at 3-15°C/s.

KR 2016 0075262 A discloses a non-oriented electrical steel sheet having a low iron loss and excellent magnetic flux density, used as a core material in rotating equipment such as motors and generators and stationary equipment such as small transformers.

### SUMMARY

One objective of the present invention is to provide a non-oriented electrical steel sheet with low magnetic anisotropy, and the non-oriented electrical steel sheet is characterized by low iron loss and low magnetic anisotropy at high frequency.

The invention is defined in the appended claims.

In order to achieve the above objective, the present invention provides a non-oriented electrical steel sheet with low magnetic anisotropy, as defined in the claims.

In the non-oriented electrical steel sheet with low magnetic anisotropy according to the present invention, the design principles of each chemical element are described below:
C: in the non-oriented electrical steel sheet with low magnetic anisotropy according to the present invention, C strongly hinders the grain growth in a finished steel sheet, and tends to combine with Nb, V, Ti and the like to form fine precipitates, thereby causing increased loss and generating magnetic aging. Therefore, in the technical solution according to the present invention, the mass percentage of C is controlled to be 0<C≤0.005%.

Si: in the non-oriented electrical steel sheet with low magnetic anisotropy according to the present invention, Si improves resistivity of materials, and can effectively reduce iron loss of steel. When the mass percentage of Si is higher than 3.5%, magnetic induction of the steel will be markedly reduced; and when the mass percentage of Si is lower than 2.0%, it cannot effectively reduce the iron loss. Based on this, in the non-oriented electrical steel sheet with low magnetic anisotropy according to the present invention, the mass percentage of Si is controlled to be: Si: 2.0-3.5%.

Mn: in the technical solution according to the present invention, Mn combines with S to form MnS, which can reduce the harm to magnetic properties. When the mass percentage of Mn is lower than 0.1%, a sulfur retention effect will be poor; and when the mass percentage of Mn is higher than 2.0% or more, a recrystallization effect of the steel will be inhibited. Based on this, in the non-oriented electrical steel sheet with low magnetic anisotropy according to the present invention, the mass percentage of Mn is controlled to be: Mn: 0.1-2.0%.

At least one of Sn and Sb: in the non-oriented electrical steel sheet with low magnetic anisotropy according to the present invention, Sn and Sb can improve a crystal texture of the steel. Therefore, 0.003% or more of Sn and/or Sb are added into the steel. However, when more than 0.2% of Sn and/or Sb are added into the steel, it will cause abnormal grain refinement and deterioration of the iron loss of the steel. Based on this, in the non-oriented electrical steel sheet with low magnetic anisotropy according to the present invention, the mass percentage of Sn and Sb is controlled such that: at least one of Sn and Sb is 0.003-0.2%.

Al: in the non-oriented electrical steel sheet with low magnetic anisotropy according to the present invention, when the mass percentage of Al is lower than 0.2%, a good deoxidization effect cannot be achieved; and when the mass percentage of Al exceeds 1.8%, it will cause difficulty in continuous casting and degrade the workability of cold rolling. Based on this, in the non-oriented electrical steel sheet with low magnetic anisotropy according to the present invention, the mass percentage of Al is controlled to be: Al: 0.2-1.8%.

The non-oriented electrical steel sheet with low magnetic anisotropy according to the present invention has an average grain size of 90-140 µm.

The average grain size is limited to be 90-140 µm. When the average grain size is lower than 90 µm, due to inclusions pinning the grain boundary and insufficient driving force for grain growth, magnetic hysteresis loss of the steel sheet is dominated and relatively high, resulting in high iron loss; meanwhile, due to the poor stability of grain orientation control, the magnetic anisotropy (L, C) of the steel sheet will exceed the desired level, that is, a ratio of a difference between an electromagnetic property parallel to a rolling direction and an electromagnetic property perpendicular to the rolling direction to a sum of the electromagnetic property parallel to the rolling direction and the electromagnetic property perpendicular to the rolling direction is large. In addition, when the average grain size is higher than 130 µm, a harmful {111} plane texture will rapidly grow to swallow the proportion of a favorable {100} plane texture, thereby causing the magnetic induction to deteriorate.

In the non-oriented electrical steel sheet with low magnetic anisotropy according to the present invention, the inevitable impurities include: P≤0.2%, S≤0.003%, N≤0.002%, O≤0.002%, and Ti≤0.0015%.

The inevitable impurities should be controlled to be less. P is controlled to be ≤0.2%, because when the mass percentage of P exceeds 0.2%, it is prone to causing cold brittleness, thereby reducing manufacturability of a cold rolling process. S is controlled to be ≤0.003%, because when the mass percentage of S exceeds 0.003 %, the quantity of harmful inclusions of MnS and Cu₂S will be greatly increased, thereby damaging a favorable texture of the steel and hindering the grain growth of a finished product. N is controlled to be ≤0.002%, because when the mass percentage of N exceeds 0.002%, the precipitates of N and Nb, V, Ti, Al, etc. will be greatly increased, thereby strongly hindering the grain growth and deteriorating magnetic properties of the steel. O is controlled to be ≤0.002%, because when the mass percentage of O exceeds 0.002%, the quantity of oxide inclusions will be greatly increased, which is not conducive to adjusting the proportion of inclusions and will deteriorate the magnetic properties of the steel. Ti is controlled to be ≤0.0015%, because when the mass percentage of Ti exceeds 0.0015%, precipitates of Ti and C and N will be greatly increased, thereby strongly hindering the grain growth and deteriorating the magnetic properties of the steel.

The non-oriented electrical steel sheet with low magnetic anisotropy according to the present invention contains composite inclusions formed by MnS and Cu₂S, with MnS as the core and Cu₂S formed on the periphery of MnS, and the inclusions have a size of 150-500 nm.

Preferably, in the non-oriented electrical steel sheet with low magnetic anisotropy according to the present invention, the inclusions have a shape of a sphere or a spheroid, and the inclusions have a plane projection of a circle or an ellipse.

In the above embodiment, by controlling the elements C, N, and Ti of the non-oriented electrical steel sheet of the present invention, during the cooling process of the continuous casting slab, coarse-sized MnS inclusions are preferentially precipitated, and the subsequent precipitation of low-melting, small-sized compounds (Ti, C, and N) can be avoided at the same time. Furthermore, under slow cooling conditions, the MnS inclusions are more prone to coarsening and growing, so that they eventually maintain a good shape of a sphere or a spheroid. As the spherical or spheroidal inclusions are not prone to forming more harmful wedge domains, they are easier to magnetize and the obtained non-oriented electrical steel sheet has excellent magnetic properties.

Preferably, in the non-oriented electrical steel sheet with low magnetic anisotropy according to the present invention, when the inclusions have a plane projection of an ellipse, the ellipse has a ratio of a long axis diameter to a short axis diameter of ≤4.0.

In the above embodiment, the MnS and Cu₂S inclusions in the precipitates have a small difference in liquid phase external force, are not prone to deformation, and tend to form spherical or spheroidal inclusions, which have a plane projection of a circle or an ellipse, and the ellipse has a ratio of a long axis diameter to a short axis diameter of ≤4.0.

Preferably, in the non-oriented electrical steel sheet with low magnetic anisotropy according to the present invention, it has an iron loss P_{10/400} of ≤11.0 W/kg, and a magnetic induction B₅₀ of ≥1.66 T. The term "magnetic anisotropy" of an electrical steel sheet refers to a ratio of a difference between an iron loss P_{10/400 L} parallel to the rolling direction and an iron loss P_{10/400 C} perpendicular to the rolling direction to a sum of the iron loss P_{10/400 L} parallel to the rolling direction and the iron loss P_{10/400} c perpendicular to the rolling direction. Herein, the electrical steel sheet of the present invention has a magnetic anisotropy of ≤10%, which shows that the magnetic anisotropy of the electrical steel sheet is low. Herein, the measuring method of the electromagnetic properties is as follows: according to the Epstein square method (GB 10129-1988), the measurement is carried out with the Brockhaus magnetic measuring equipment (Germany). Herein, P_{10/400} represents an iron loss value tested under a condition of 1.0T and 400Hz, and B₅₀ represents a magnetic induction value tested under a condition of 5000A/m.

Accordingly, another objective of the present invention is to provide a manufacturing method for the above non-oriented electrical steel sheet with low magnetic anisotropy, and the non-oriented electrical steel sheet with low iron loss and small magnetic anisotropy at high frequency can be obtained through the manufacturing method.

In order to achieve the above objective, the present invention provides a manufacturing method of the above non-oriented electrical steel sheet with low magnetic anisotropy, as defined in the claims, which includes the following steps:
(1) smelting and casting;
(2) hot rolling;
(3) normalizing;
(4) cold rolling;
(5) continuous annealing: rapidly heating a cold-rolled steel sheet from an initial temperature of 350°C-750°C to a soaking temperature at a heating rate of 50-800°C/s, and performing soaking and heat preservation; and
(6) applying an insulating coating to obtain a finished non-oriented electrical steel sheet.

In the manufacturing method of the present invention, due to a large reduction ratio in cold rolling process as well as a high energy storage and many dislocations inside a cold-rolled steel sheet, it is conducive to the growth of harmful {111} plane texture and a favorable Goss texture and {110} surface texture with the relative small size are swallowed in the subsequent continuous annealing process. Therefore, cold rolled steel sheet is continuously annealed by: rapidly heating a cold-rolled steel sheet from an initial temperature of 350°C-750°C to a soaking temperature at a heating rate of 50-800°C/s, and performing soaking and heat preservation. This is because: through the continuous annealing process as described above, the crystal recovery can be effectively suppressed, and the residual deformation energy storage before recrystallization can be increased; thus, driving force for nucleation increases, and the strength of a <111>//ND recrystallization texture component decreases, which is conducive to the enhancement and improvement of electromagnetic properties. On the other hand, when the initial temperature of the continuous annealing is lower than 350°C, the residual deformation energy storage before the recrystallization is too high, formation of fine crystals and segregation are prone to occur subsequently, and it is necessary to increase the soaking temperature and soaking time of continuous annealing to achieve homogenization. However, when the initial temperature of the continuous annealing is higher than 750°C, the stability of grain orientation control will be poor and the proportion of favorable {100} plane texture will be greatly reduced, resulting in deterioration of magnetic induction. Herein, during rapid heating by electromagnetic induction, when the heating rate is lower than 50°C/s, the recrystallization process cannot be effectively controlled to form sufficient energy storage for subsequent control of grain orientation; and when the heating rate is higher than 800°C/s, the formation of fine crystals and unevenness of recrystallized structure are prone to occur, meanwhile, requirements for equipment functions will be higher, and equipment investment and operating cost will be increased.

In the manufacturing method according to the present invention, step (1) includes a converter tapping process, ladle slag is subjected to modification treatment in the converter tapping process to satisfy: (CaO)/(Al₂O₃)≥0.85, and T_{Fe}≥13%, wherein (CaO) and (Al₂O₃) represent the content of CaO and Al₂O₃ in mass percentage, respectively; and T _{Fe} represents the total content of the Fe element in mass percentage.

The above solution is mainly based on the following considerations: by increasing the content of T _{Fe} in the slag, the reduction reaction of harmful element Ti in the slag and the steel can be effectively avoided; and by increasing the ratio of (CaO)/(Al₂O₃), it is conducive to absorb harmful inclusions CaO and Al₂O₃ in the steel, thereby promoting the desulphurization reaction and inhibiting the precipitation of sulfide inclusions in continuous casting and hot rolling processes.

Preferably, in the manufacturing method according to the present invention, in step (4), the steel sheet is directly rolled to a finished product thickness of 0.10-0.30 mm by using a single cold rolling process.

Preferably, in the manufacturing method according to the present invention, in step (5), the heating rate is 100-600°C/s.

Compared with the prior art, the non-oriented electrical steel sheet with low magnetic anisotropy according to the present invention has the following advantages and beneficial effects: the non-oriented electrical steel sheet according to the present invention is characterized by low iron loss and low magnetic anisotropy at high frequency through the effective design of each component in the steel sheet.

In addition, the manufacturing method according to the present invention also has the above advantages and beneficial effects.

### BRIEF DESCRIPTION OF DRAWINGS

Fig. 1 shows the distribution of harmful inclusions in the conventional steel sheet of Comparative Example A4.
Fig. 2 shows the type and size distribution of harmful inclusions in the non-oriented electrical steel sheet with low magnetic anisotropy of Inventive Example A16.
Fig. 3 schematically shows the relationship between different (CaO)/(Al₂O₃) and T_{Fe}.
Fig. 4 schematically shows the relationship between different (CaO)/(Al₂O₃) and (CaO)/(SiO₂).
Fig. 5 schematically shows the relationship between different grain sizes and magnetic induction B₅₀.
Fig. 6 schematically shows the relationship between different grain sizes and iron loss P_{10/400}.

### DETAILED DESCRIPTION

The non-oriented electrical steel sheet with low magnetic anisotropy and manufacturing method therefor according to the present invention are further explained and illustrated below with reference to the drawings of the specification and the specific embodiments, however, the technical solution of the present invention is not limited to the explanation and illustration.

### Inventive Examples A9-A21 and Comparative Examples A1-A8

The non-oriented electrical steel sheets of Inventive Examples A9-A21 and the conventional steel sheets of Comparative Examples A1-A8 were manufactured by the following steps:
(1) The molten iron and steel scrap were prepared according to the composition as shown in table 1. After converter smelting, the ladle slag was modified, and subjected to decarburization and alloying in RH refining. The molten steel was continuously cast to obtain a continuous casting slab with a thickness of 120-250 mm and a width of 800-1400 mm.
(2) Hot rolling: The continuous casting slab was sequentially subjected to rough rolling and finish rolling to obtain a hot-rolled steel sheet. The hot-rolled steel sheet had a thickness of 1.5-2.8 mm.
(3) Normalizing: The hot-rolled steel sheet was normalized, wherein the soaking temperature was 800-1000°C and the soaking time was 1-180 s during the normalization process.
(4) Cold rolling: The steel sheet was directly rolled to a thickness of 0.10-0.30 mm by using the single cold rolling process.
(5) Continuous annealing: The cold-rolled steel sheet was rapidly heated from an initial temperature of 350°C-750°C to a soaking temperature at a heating rate of 50-800°C/s, and soaking and heat preservation were conducted.
(6) An insulating coating was applied to obtain a finished non-oriented electrical steel sheet with a thickness of 0.10-0.30 mm.

It should be noted that in some preferable embodiments, the heating rate is 100-600°C/s.

In addition, in some preferable embodiments, the ladle slag was subjected to modification treatment in a converter tapping process to satisfy: (CaO)/(Al₂O₃)≥0.85 and T_{Fe}≥13%, wherein (CaO) and (Al₂O₃) represent contents of CaO and Al₂O₃ in mass percentage, respectively.

Table 1 lists the mass percentages of chemical elements of the non-oriented electrical steel sheets according to Inventive Examples A9-A21 and the conventional steel sheets according to Comparative Examples A1-A8.

Table 2 lists the specific process parameters of the non-oriented electrical steel sheets according to Inventive Examples A9-A21 and the conventional steel sheets according to Comparative Examples A1-A8.

In table 2 the size of MnS and Cu₂S refers to composite inclusions formed by MnS and Cu₂S, with MnS as the core and Cu₂S formed on the periphery of MnS.

**Table 1 (wt%, the balance being Fe and other inevitable impurities other than P, S, N, O and Ti)**

| No. | C | Si | Mn | P | S | Al | O | N | Sn | Sb | Ti | Note |
|---|---|---|---|---|---|---|---|---|---|---|---|---|
| Al | 0.0011 | ***1.22*** | 1.85 | 0.11 | 0.0021 | 0.83 | 0.0006 | 0.0011 | / | / | 0.0011 | Comparative example |
| A2 | 0.0021 | ***1.85*** | ***2.52*** | 0.06 | 0.0012 | ***0.19*** | 0.0011 | 0.0015 | 0 | 0.008 | ***0.0017*** | Comparative example |
| A3 | 0.0035 | 2.14 | 0.89 | 0.04 | 0.0009 | 1.16 | 0.0008 | ***0.0029*** | 0.11 | 0.04 | 0.0015 | Comparative example |
| A4 | 0.0028 | 2.29 | 0.25 | 0.18 | 0.0011 | ***0.002*** | 0.0019 | 0.0008 | 0.03 | 0.02 | 0.0008 | Comparative example |
| A5 | 0.0008 | 2.85 | 1.47 | 0.02 | 0.0005 | ***1.89*** | 0.0008 | 0.0017 | ***0.001*** | 0 | 0.0011 | Comparative example |
| A6 | 0.0044 | 3.15 | 0.58 | 0.13 | 0.0030 | 0.78 | 0.0017 | 0.0010 | 0.02 | 0.07 | 0.0014 | Comparative example |
| A7 | 0.0031 | 3.27 | 0.71 | 0.07 | 0.0008 | ***2.25*** | 0.0013 | 0.0012 | 0.04 | 0 | 0.0005 | Comparative example |
| A8 | 0.0016 | ***3.62*** | 0.16 | 0.03 | 0.0005 | ***0.14*** | 0.0008 | 0.0009 | 0 | 0.08 | ***0.0025*** | Comparative example |
| A9 | 0.0018 | 2.00 | 2.00 | 0.20 | 0.0030 | 0.20 | 0.0011 | 0.0014 | 0.008 | 0.003 | 0.0002 | Inventive Example |
| A10 | 0.0041 | 2.11 | 0.55 | 0.16 | 0.0021 | 1.80 | 0.0013 | 0.0007 | 0 | 0.005 | 0.0011 | Inventive Example |
| A11 | 0.0028 | 2.38 | 1.32 | 0.02 | 0.0026 | 0.93 | 0.0020 | 0.0006 | 0.008 | 0 | 0.0008 | Inventive Example |
| A12 | 0.0019 | 2.54 | 0.96 | 0.04 | 0.0022 | 0.92 | 0.0011 | 0.0008 | 0.002 | 0.011 | 0.0007 | Inventive Example |
| A13 | 0.0043 | 2.61 | 0.75 | 0.03 | 0.0011 | 0.55 | 0.0013 | 0.0016 | 0.005 | 0.005 | 0.0015 | Inventive Example |
| A14 | 0.0035 | 2.05 | 0.10 | 0.05 | 0.0015 | 1.27 | 0.0008 | 0.0020 | 0.15 | 0.05 | 0.0013 | Inventive Example |
| A15 | 0.0031 | 2.92 | 0.50 | 0.02 | 0.0008 | 0.82 | 0.0005 | 0.0008 | 0.02 | 0.09 | 0.0010 | Inventive Example |
| A16 | 0.0012 | 3.01 | 0.31 | 0.03 | 0.0008 | 0.42 | 0.0007 | 0.0005 | 0.04 | 0.02 | 0.0012 | Inventive Example |
| A17 | 0.0020 | 3.24 | 1.62 | 0.05 | 0.0016 | 0.81 | 0.0003 | 0.0013 | 0.05 | 0.12 | 0.0013 | Inventive Example |
| A18 | 0.0033 | 3.18 | 0.22 | 0.11 | 0.0002 | 0.60 | 0.0007 | 0.0007 | 0.07 | 0.01 | 0.0005 | Inventive Example |
| A19 | 0.0021 | 3.35 | 1.17 | 0.02 | 0.0008 | 0.22 | 0.0009 | 0.0011 | 0.05 | 0 | 0.0011 | Inventive Example |
| A20 | 0.0015 | 3.42 | 0.45 | 0.04 | 0.0011 | 0.45 | 0.0012 | 0.0014 | 0.03 | 0.08 | 0.0009 | Inventive Example |
| A21 | 0.0050 | 3.50 | 0.17 | 0.03 | 0.0015 | 1.00 | 0.0011 | 0.0006 | 0 | 0.003 | 0.0005 | Inventive Example |

**Table 2**

| No. | (CaO)/ (Al₂O₃) | T_{Fe} [%] | Size of MnS and Cu₂S [nm] | Ratio of long axis diameter/short axis diameter of ellipse | Initial temp. for rapid heating [°C] | Heating rate [°C/s] | Average grain size [µm] | Iron loss P_{10/400} [W/kg] | Iron loss P_{10/400} L [W/kg] | Iron loss P_{10/400 C} [W/kg] | Magnetic induction B₅₀ [T] | Magnetic anisotrop y [%] | Note |
|---|---|---|---|---|---|---|---|---|---|---|---|---|---|
| A1 | ***0.21*** | 13.8 | ***95*** | 2.5 | ***20*** | 600 | ***78*** | ***12.7*** | 5.64 | 7.06 | ***1.64*** | ***11.2*** | Comparativ e example |
| A2 | 0.89 | 15.9 | ***83*** | 3.7 | 650 | 400 | ***82*** | ***11.4*** | 4.97 | 6.43 | ***1.62*** | ***12.8*** | Comparativ e example |
| A3 | 1.27 | ***3.1*** | 154 | 2.9 | 450 | 300 | ***82*** | ***11.8*** | 5.26 | 6.54 | ***1.63*** | *10.8* | Comparativ e example |
| A4 | ***2.23*** | 16.8 | 231 | ***4.8*** | ***800*** | ***900*** | ***69*** | ***12.5*** | 5.51 | 6.99 | ***1.63*** | ***11.8*** | Comparativ e example |
| A5 | 1.88 | ***5.2*** | 317 | 2.8 | ***20*** | ***15*** | ***72*** | ***12.2*** | 5.46 | 6.74 | ***1.65*** | ***10.5*** | Comparativ e example |
| A6 | ***0.43*** | 18.4 | ***65*** | ***5.2*** | 500 | 100 | ***53*** | ***13.0*** | 5.80 | 7.20 | ***1.65*** | ***10.7*** | Comparativ e example |
| A7 | ***0.21*** | 20.5 | ***38*** | 1.7 | 350 | 400 | ***71*** | ***12.2*** | 5.23 | 6.97 | ***1.63*** | ***14.3*** | Comparativ e example |
| A8 | 1.57 | 17.1 | 417 | 1.3 | ***200*** | 200 | ***82*** | ***11.7*** | 5.25 | 6.45 | ***1.64*** | ***10.2*** | Comparativ e example |
| A9 | 0.87 | 16.5 | 163 | 3.5 | 350 | 200 | 118 | 11.0 | 5.05 | 5.95 | 1.68 | 8.2 | Inventive Example |
| A10 | 1.15 | 15.2 | 211 | 1.4 | 500 | 400 | 98 | 10.8 | 5.11 | 5.69 | 1.66 | 5.3 | Inventive Example |
| A11 | 1.32 | 16.8 | 418 | 3.2 | 700 | 800 | 121 | 10.6 | 4.81 | 5.79 | 1.70 | 9.2 | Inventive Example |
| A12 | 1.67 | 13.0 | 357 | 3.0 | 600 | 800 | 95 | 11.0 | 5.14 | 5.86 | 1.72 | 6.5 | Inventive Example |
| A13 | 1.85 | 13.8 | 259 | 1.8 | 450 | 50 | 127 | 10.5 | 4.82 | 5.68 | 1.70 | 8.1 | Inventive Example |
| A14 | 1.93 | 14.5 | 183 | 0.7 | 750 | 200 | 137 | 10.3 | 4.97 | 5.33 | 1.69 | 3.5 | Inventive Example |
| A15 | 0.97 | 18.2 | 326 | 2.8 | 600 | 200 | 122 | 10.7 | 5.07 | 5.63 | 1.71 | 5.2 | Inventive Example |
| A16 | 1.41 | 19.1 | 453 | 1.2 | 650 | 300 | 130 | 10.4 | 4.83 | 5.57 | 1.71 | 7.1 | Inventive Example |
| A17 | 0.87 | 18.4 | 194 | 1.5 | 700 | 450 | 118 | 10.6 | 5.04 | 5.56 | 1.72 | 4.9 | Inventive Example |
| A18 | 1.04 | 16.5 | 288 | 2.0 | 350 | 550 | 125 | 10.5 | 5.05 | 5.45 | 1.70 | 3.8 | Inventive Example |
| A19 | 1.38 | 17.3 | 391 | 3.2 | 550 | 250 | 107 | 10.7 | 5.02 | 5.68 | 1.69 | 6.2 | Inventive Example |
| A20 | 1.57 | 14.0 | 357 | 2.4 | 400 | 100 | 101 | 10.3 | 4.92 | 5.38 | 1.68 | 4.4 | Inventive Example |
| A21 | 1.79 | 15.1 | 254 | 1.1 | 500 | 700 | 123 | 10.5 | 5.06 | 5.44 | 1.72 | 3.6 | Inventive Example |

As can be seen from Tables 1 and 2, the non-oriented electrical steel sheets according to the Inventive Examples contained composite inclusions mainly composed of MnS and Cu₂S, and the inclusions had a size of 150-500 nm. Furthermore, the inclusions had a shape of a sphere or a spheroid, and the inclusions had a plane projection of a circle or an ellipse. Furthermore, when the inclusions had a plane projection of an ellipse, the ellipse had a ratio of a long axis diameter to a short axis diameter of ≤4.0.

In addition, the non-oriented electrical steel sheets according to the Inventive Examples had an iron loss P_{10/400} of ≤11.0 W/kg, a magnetic induction B₅₀ of ≥1.66 T, and a magnetic anisotropy (i.e., a ratio of a difference between an iron loss P_{10/400 L} parallel to a rolling direction and an iron loss P_{10/400 C} perpendicular to the rolling direction to a sum of the iron loss P_{10/400 L} parallel to the rolling direction and the iron loss P_{10/400 C} perpendicular to the rolling direction) of ≤10%.

In contrast, the conventional steel sheets according to the Comparative Examples did not achieve the technical effects brought by the Inventive Examples. That is, the conventional steel sheets according to the Comparative Examples exhibited poor control effect on magnetic induction and iron loss, and exhibited a large magnetic anisotropy. For example, for the conventional steel sheet in Comparative Example 1, the finished steel sheet had a high iron loss (12.7 W/kg), a low magnetic induction (1.64 T), and a magnetic anisotropy reaching 11.2%, owing to the facts that: the content of Si did not fall within the scope limited by the present invention, Sn and/or Sb were not added, and (CaO)/(Al₂O₃) was only 0.21, which resulted in the size of corresponding inclusions MnS and Cu₂S being only 95 nm; in addition, a continuous annealing process according to the present invention was not used.

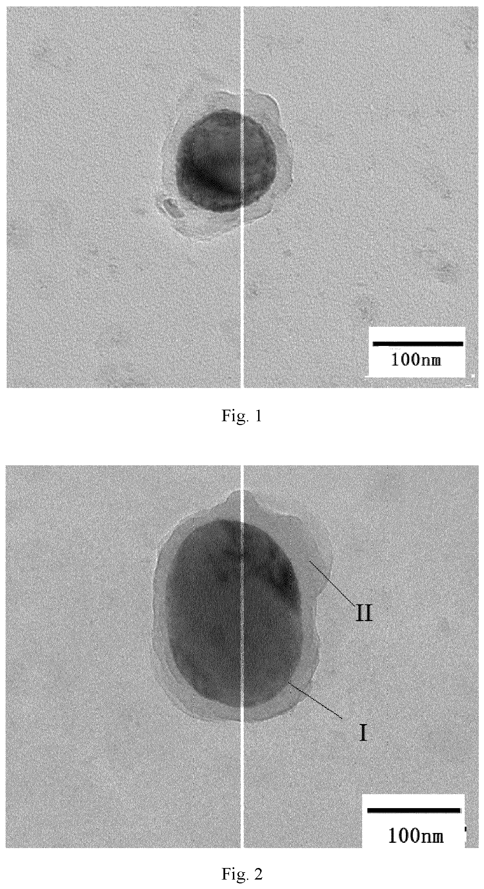

Fig. 1 shows the distribution of harmful inclusions of the convention steel sheet of Comparative Example A4. Fig. 2 shows the type and size distribution situation of harmful inclusions of the non-oriented electrical steel sheet with low magnetic anisotropy of Inventive Example A16.

As can be seen from Figs. 1 and 2, the size of MnS (position "I" as shown in Fig. 2) of the non-oriented electrical steel sheet of Inventive Example A16 was obviously greater than that of MnS of the conventional steel sheet of Comparative Example A4. The average size of peripheral Cu₂S composite inclusions (position "II" as shown in Fig. 2) precipitated with MnS as the core was 300 nm. Compared with Comparative Example A4, the size of inclusions of Inventive Example A16 was 2-3 times larger, and therefore, the damage was greatly reduced.

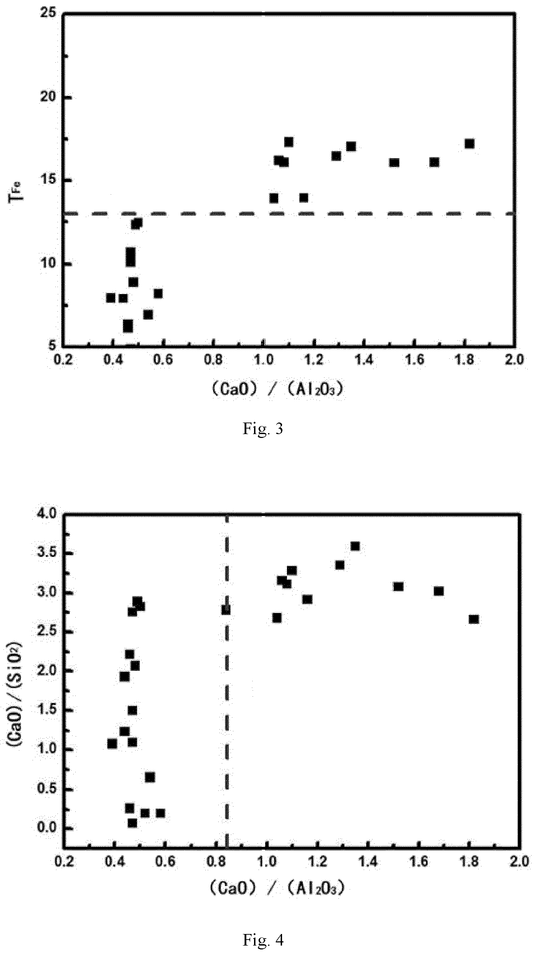

When the ladle slag was subjected to modification treatment, a better control effect can be achieved by controlling (CaO)/(Al₂O₃) ≥ 0.85 and T_{Fe} ≥ 13%. Figs. 3 and 4 respectively indicate the control effect on the ladle slag, wherein Fig. 3 schematically shows the relationship between different (CaO)/(Al₂O₃) ratios and T_{Fe}, and Fig. 4 schematically shows the relationship between different (CaO)/(Al₂O₃) ratios and (CaO)/(SiO₂).

As can be seen from Figs. 3 and 4, by increasing the content of T _{Fe} in the slag, the reduction reaction of harmful element Ti in the slag and the steel can be effectively avoided; and by increasing the (CaO)/(Al₂O₃), it is conducive to absorb harmful inclusions such as CaO and Al₂O₃ in the steel, thereby promoting the desulphurization reaction and inhibiting the precipitation of sulfide inclusions in continuous casting and hot rolling processes.

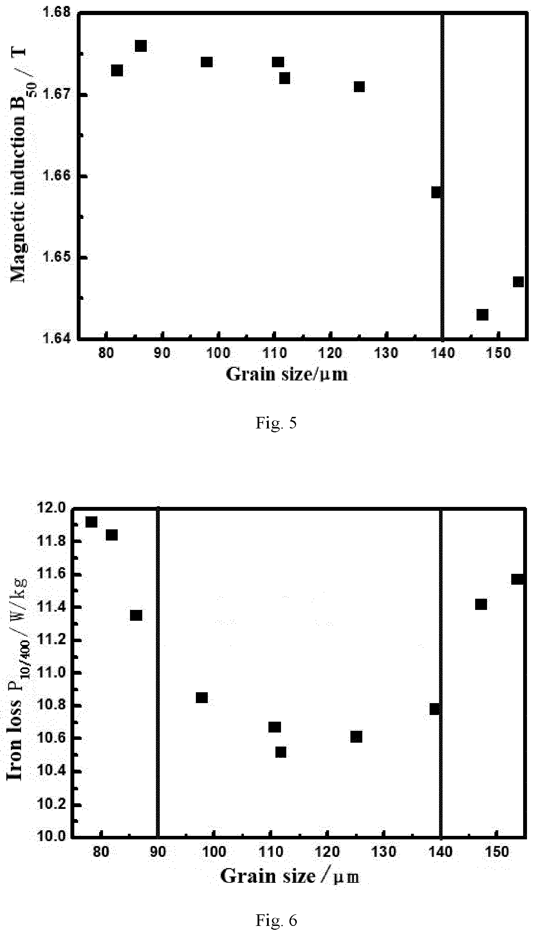

Fig. 5 schematically shows the relationship between different grain sizes and magnetic induction B₅₀. Fig. 6 schematically shows the relationship between different grain sizes and iron loss P_{10/400}.

As can be seen from Figs. 5 and 6, when the average grain size is in the range of 90-140 µm, the non-oriented electrical steel sheets of the present invention exhibited better magnetic properties, which had an iron loss P_{10/400} of ≤11.0 W/kg and a magnetic induction B₅₀ of ≥1.66 T, this is because: when the average grain size is lower than 90 µm, due to inclusions pinning the grain boundary and insufficient driving force for grain growth, magnetic hysteresis loss of the steel sheet is dominated and relatively high, resulting in high iron loss; meanwhile, due to the poor stability of grain orientation control, the magnetic anisotropy (L, C) of the steel sheet will exceed the desired level, that is, a ratio of a difference between an iron loss P_{10/400 L} parallel to a rolling direction and an iron loss P_{10/400} c perpendicular to the rolling direction to a sum of the iron loss P_{10/400 L} parallel to the rolling direction and the iron loss P_{10/400 C} perpendicular to the rolling direction is large. In addition, when the average grain size is higher than 130 µm, a harmful {111} plane texture will rapidly grow to swallow the proportion of a favorable {100} plane texture, thereby causing the magnetic induction to deteriorate.

In conclusion, it can be seen that the non-oriented electrical steel sheet with low magnetic anisotropy according to the present invention is characterized by low iron loss and low magnetic anisotropy at high frequency, through effective design of each component in the steel sheet.

In addition, the manufacturing method according to the present invention also has the above advantages and beneficial effects.

The combination of various technical features in the present disclosure is not limited to the combination described in the claims or the combination described in specific embodiments. All the technical features described in the present disclosure can be freely combined or combined in any way unless there is a contradiction between them.

It should also be noted that the above-listed Examples are only specific embodiments of the present disclosure. Apparently, the present disclosure is not limited to the above embodiments, and similar variations or modifications that are directly derived or easily conceived from the present disclosure by those skilled in the art should fall within the scope of the present invention as defined in the claims.

## Claims

1. A non-oriented electrical steel sheet, comprising the following chemical elements in mass percentage:
0< C ≤0.005%; Si: 2.0-3.5%; Mn: 0.1-2.0%; Sn and/or Sb: 0.003-0.2%; Al: 0.2-1.8%; the balance being Fe and inevitable impurities,
wherein the inevitable impurities include: P≤0.2%, S≤0.003%, N≤0.002%, O≤0.002%, and Ti≤0.0015%,
wherein the electrical steel sheet contains composite inclusions formed by MnS and Cu₂S, with MnS as the core and Cu₂S formed on the periphery of MnS, and the inclusions have a size of 150-500 nm; and
wherein the electrical steel sheet has an average grain size of 90-140 µm.

2. The non-oriented electrical steel sheet according to claim 1, wherein the inclusions have a shape of a sphere or a spheroid, and the inclusions have a plane projection of a circle or an ellipse.

3. The non-oriented electrical steel sheet according to claim 2, wherein the inclusions have a plane projection of an ellipse, and the ellipse has a ratio of a long axis diameter to a short axis diameter of ≤4.0.

4. The non-oriented electrical steel sheet according to any one of claims 1-3, wherein the electrical steel sheet has an iron loss P_{10/400} of ≤11.0 W/kg, a magnetic induction B₅₀ of ≥1.66 T, and a magnetic anisotropy, which is a ratio of a difference between an iron loss P_{10/400} parallel to a rolling direction and an iron loss P_{10/400} perpendicular to the rolling direction to a sum of the iron loss P_{10/400} parallel to the rolling direction and the iron loss P_{10/400} perpendicular to the rolling direction, of ≤10%, wherein electromagnetic properties are measured according to 10 the Epstein square method GB 10129-1988.

5. A manufacturing method for the non-oriented electrical steel sheet according to any one of claims 1-4, comprising the following steps:
(1) smelting and casting;
(2) hot rolling;
(3) normalizing;
(4) cold rolling;
(5) continuous annealing: rapidly heating a cold-rolled steel sheet from an initial temperature of 350°C-750°C to a soaking temperature at a heating rate of 50-800°C/s, and performing soaking and heat preservation; and
(6) applying an insulating coating to obtain a finished non-oriented electrical steel sheet,
wherein step (1) includes a converter tapping process, ladle slag is subjected to modification treatment in the converter tapping process to satisfy: (CaO)/(Al₂O₃)≥0.85, and T_{Fe} ≥ 13%, wherein (CaO) and (Al₂O₃) represent contents of CaO and Al₂O₃ in mass percentage, respectively, and T_{Fe} represents the total content of the Fe element in mass percentage.

6. The manufacturing method according to claim 5, wherein in step (4), the steel sheet is directly rolled to a finished product thickness of 0.10-0.30 mm by using a single cold rolling process.

7. The manufacturing method according to claim 5, wherein in step (5), the heating rate is 100-600°C/s.

## Patentansprüche

1. Nicht orientiertes Elektrostahlblech, umfassend die folgenden chemischen Elemente in Massenprozent:
0<C≤0,005 %; Si: 2,0-3,5 %; Mn: 0,1-2,0 %; Sn und/oder Sb: 0,003-0,2 %; Al: 0,2-1,8 %; der Rest besteht aus Fe und unvermeidbaren Verunreinigungen,
wobei die unvermeidbaren Verunreinigungen Folgendes umfassen: P≤0,2 %, S≤0,003 %, N≤0,002 %, O≤0,002 % und Ti≤0,0015 %,
wobei das Elektrostahlblech Verbund Einschlüsse enthält, die aus MnS und Cu₂S gebildet sind, wobei MnS den Kern bildet und Cu₂S an der Peripherie von MnS gebildet ist, und die Einschlüsse eine Größe von 150-500 nm aufweisen; und
wobei das Elektrostahlblech eine durchschnittliche Korngröße von 90-140 µm aufweist.

2. Nicht orientiertes Elektrostahlblech gemäß Anspruch 1, wobei die Einschlüsse die Form einer Kugel oder eines Sphäroids haben und die Einschlüsse eine ebene Projektion eines Kreises oder einer Ellipse haben.

3. Nicht orientiertes Elektrostahlblech gemäß Anspruch 2, wobei die Einschlüsse eine ebene Projektion einer Ellipse aufweisen und die Ellipse ein Verhältnis des Durchmessers der langen Achse zum Durchmesser der kurzen Achse von ≤4,0 aufweist.

4. Nicht orientiertes Elektrostahlblech gemäß einem der Ansprüche 1 bis 3, wobei das Elektrostahlblech einen Eisenverlust P_{10/400} von ≤11,0 W/kg, eine magnetische Induktion B₅₀von ≥1,66 T und eine magnetische Anisotropie, die das Verhältnis der Differenz zwischen dem Eisenverlust P_{10/400} parallel zur Walzrichtung und dem Eisenverlust P_{10/400} senkrecht zur Walzrichtung zur Summe aus dem Eisenverlust P_{10/400} parallel zur Walzrichtung und dem Eisenverlust P_{10/400} senkrecht zur Walzrichtung ist, von ≤10 % aufweist, wobei die elektromagnetischen Eigenschaften gemäß 10 der Epstein-Quadrat-Methode GB 10129-1988 gemessen werden.

5. Verfahren zur Herstellung des nicht orientierten Elektrostahlblechs nach einem der Ansprüche 1 bis 4, das die folgenden Schritte umfasst:
(1) Schmelzen und Gießen;
(2) Warmwalzen;
(3) Normalisieren;
(4) Kaltwalzen;
(5) kontinuierliches Glühen: schnelles Erhitzen eines kaltgewalzten Stahlblechs von einer Anfangstemperatur von 350 °C bis 750 °C auf eine Halte-Temperatur mit einer Aufheizgeschwindigkeit von 50 bis 800 °C/s und Durchführen des Haltens und der Wärmespeicherung; und
(6) Aufbringen einer isolierenden Beschichtung, um ein fertiges nicht orientiertes Elektrostahlblech zu erhalten,
wobei Schritt (1) einen Konverter-Abtapfprozess umfasst, wobei die Pfannenschlacke im Konverter-Abtapfprozess einer Modifikationsbehandlung unterzogen wird, um folgende Bedingungen zu erfüllen: (CaO)/(Al₂O₃)≥0,85 und T_{Fe}≥13 %, wobei (CaO) und (Al₂O₃) den Gehalt an CaO bzw. Al₂O₃ in Massenprozent darstellen und T_{Fe} den Gesamtgehalt des Elements Fe in Massenprozent darstellt.

6. Herstellungsverfahren gemäß Anspruch 5, wobei in Schritt (4) das Stahlblech unter Verwendung eines einzigen Kaltwalzprozesses direkt auf eine Endproduktdicke von 0,10 bis 0,30 mm gewalzt wird.

7. Herstellungsverfahren gemäß Anspruch 5, wobei in Schritt (5) die Aufheizgeschwindigkeit 100 bis 600 °C/s beträgt.

## Revendications

1. Tôle d'acier électrique non orientée, comprenant les éléments chimiques suivants en pourcentage en masse :
0<C≤0,005 % ; Si : 2,0-3,5 % ; Mn : 0,1-2,0 % ; Sn et/ou Sb : 0,003-0,2 % ; Al : 0,2-1,8 % ; le reste étant Fe et des impuretés inévitables ;
dans laquelle les impuretés inévitables incluent : P≤0,2 %, S≤0,003 %, N≤0,002 %, O≤0,002 % et Ti≤0,0015 %,
dans laquelle la tôle d'acier électrique contient des inclusions composites formées par MnS et Cu₂S, avec MnS comme noyau et Cu₂S formé sur la périphérie de MnS, et les inclusions ont une taille de 150-500 nm ; et
dans laquelle la tôle d'acier électrique présente une taille de grain moyenne de 90-140 µm.

2. Tôle d'acier électrique non orientée selon la revendication 1, dans laquelle les inclusions ont une forme d'une sphère ou d'une sphéroïde, et les inclusions ont une projection plane d'un cercle ou d'une ellipse.

3. Tôle d'acier électrique non orientée selon la revendication 2, dans laquelle les inclusions présentent une projection plane d'une ellipse, et l'ellipse présente un rapport d'un diamètre de grand axe à un diamètre de petit axe de ≤ 4,0.

4. Tôle d'acier électrique non orientée selon l'une des revendications 1 à 3, dans laquelle la tôle d'acier électrique présente une perte de fer P_{10/400} de ≤11, 0 W/kg, une induction magnétique B₅₀ de ≥1,66 T et une anisotropie magnétique, qui est un rapport d'une différence entre une perte de fer P_{10/400} parallèle à une direction de laminage et une perte de fer P_{10/400} perpendiculaire à la direction de laminage à une somme de la perte de fer P_{10/400} parallèle à la direction de laminage et de la perte de fer P_{10/400} perpendiculaire à la direction de laminage, de ≤10 %, dans laquelle les propriétés électromagnétiques sont mesurées selon 10 la méthode du cadre Epstein GB 10129-1988.

5. Procédé de fabrication pour la tôle d'acier électrique non orientée selon l'une des revendications 1 à 4, comprenant les étapes suivantes :
(1) fusion et coulée ;
(2) laminage à chaud ;
(3) normalisation ;
4) laminage à froid ;
(5) recuit continu : chauffage rapide d'une tôle d'acier laminée à froid d'une température initiale de 350 °C-750 °C à une température d'égalisation à une vitesse de chauffage de 50-800 °C/s, et réalisation d'une égalisation et conservation de chaleur ; et
(6) application d'un revêtement isolant pour obtenir une tôle d'acier électrique non orientée finie,
dans lequel l'étape (1) comporte un processus de décrassage de convertisseur, les scories de poche sont soumises à un traitement de modification dans le processus de décrassage de convertisseur pour satisfaire :
(CaO)/(Al₂O₃)≥0,85, et T_{Fe} ≥13 %, dans lequel (CaO) et (Al₂O₃) représentent des teneurs en CaO et Al₂O₃ en pourcentage en masse, respectivement, et T_{Fe} représente la teneur totale en l'élément Fe en pourcentage en masse.

6. Procédé de fabrication selon la revendication 5, dans lequel, à l'étape (4), la tôle d'acier est directement laminée jusqu'à une épaisseur de produit fini de 0,10-0,30 mm en utilisant un seul processus de laminage à froid.

7. Procédé de fabrication selon la revendication 5, dans lequel à l'étape (5), la vitesse de chauffage est de 100-600 °C/s.
